# FASCICULE DE BREVET EUROPEEN

(11) **EP 1 556 586 B1**
(45) Date de publication et mention de la délivrance du brevet: **30.07.2008**
(21) Numéro de dépôt: 03780238.6
(22) Date de dépôt: 28.10.2003
(51) Int. Cl.: F01N 3/023, F24J 1/00

(54) **PROCEDE ET DISPOSITIF DE REGENERATION D'UN FILTRE A PARTICULES POUR LIGNE D' ECHAPPEMENT, ET FILTRE A PARTICULES ADAPTE**
VERFAHREN UND VORRICHTUNG ZUR REGENERIERUNG EINES PARTIKELFILTERS FÜR ABGASLEITUNGEN, UND GEEIGNETER PARTIKELFILTER
METHOD AND DEVICE FOR REGENERATING A PARTICULATE FILTER FOR EXHAUST LINE, AND ADAPTED PARTICULATE FILTER

(30) Priorité: 29.10.2002 FR 0213548
(43) Date de publication de la demande: 27.07.2005
(73) Titulaire: Peugeot Citroën Automobiles SA, 78943 Vélizy-Villacoublay Cedex (FR); CENTRE NATIONAL DE LA RECHERCHE SCIENTIFIQUE (CNRS), 75016 Paris (FR)
(72) Inventeur: MAURAN, Sylvain, F-66600 Espira de l'Agly (FR); STITOU, Driss, F-66570 Saint-Nazaire/Roussillon (FR); GUIGUET, Sandrine, F-39120 Petit-Noir (FR); BOUDARD, Emmanuel, F-78960 Voisins le Bretonneux (FR)
(74) Mandataire: Neyret, Daniel Jean Marie
(86) Numéro de dépôt international: PCT/FR2003/003210
(87) Numéro de publication internationale: WO 2004/040102

(56) Documents cités:
- EP-A- 0 160 482
- WO-A-02/26379
- US-A- 5 653 106
- US-A- 5 707 593
- US-A1- 2002 139 113
- PATENT ABSTRACTS OF JAPAN vol. 017, no. 530 (M-1485), 24 septembre 1993 (1993-09-24) & JP 05 141228 A (HITACHI LTD), 8 juin 1993 (1993-06-08)

## Description

L'invention concerne l'industrie automobile. Plus précisément, elle concerne la régénération des filtres à particules utilisés sur les lignes d'échappement des moteurs diesel de véhicules de conception récente.

Les véhicules automobiles à moteur diesel de conception récente sont équipés, sur leurs lignes d'échappement, de filtres à particules (FAP) utilisés pour réduire leurs émissions de polluants solides. Ces FAP recueillent sur leurs parois des suies qu'il est nécessaire d'éliminer régulièrement pour éviter que le FAP ne se colmate, et lui faire retrouver son efficacité nominale. De plus, le colmatage du FAP crée progressivement une contrepression néfaste au bon fonctionnement du moteur. Cette élimination peut être réalisée en portant le filtre à une température supérieure à la température de combustion des suies (celle-ci étant normalement de 550°C environ), au moyen des gaz d'échappement qui y circulent. A cet effet, la solution technique la plus commune consiste à :
- ajouter au carburant, par exemple lors du remplissage du réservoir, un additif tel que de la cérine dont la fonction est d'abaisser la température de combustion des suies aux environs de 450°C ;
- et réaliser périodiquement une post-injection de carburant dans la ligne d'échappement en amont du FAP, ce qui permet de porter les gaz d'échappement à une température suffisante pour enflammer les suies, de 450°C ou davantage.

Cette technique présente les inconvénients suivants.

En premier lieu, elle est consommatrice d'énergie puisque les post-injections entraînent une surconsommation de carburant.

D'autre part, lors de ces phases de régénération du FAP, la combustion du carburant utilisé pour la post-injection est particulièrement instable, et elle nécessite d'avoir des conditions de charge moteur et de températures des différents fluides pouvant être difficiles à atteindre dans certaines conditions de climat ou de roulage. Si cette combustion est incomplète ou mal maîtrisée, elle conduit à l'émission de gaz polluants. De plus, elle consomme de l'oxygène qui risque de faire défaut pour la combustion des suies qui doit suivre la post-injection. Il y a donc la possibilité que la post-injection ait un effet inverse de celui recherché, et la bonne gestion de la post-injection nécessite de trouver des compromis. Cette gestion doit être fine et bien contrôlée, et s'avère particulièrement complexe.

Une autre solution pour la régénération du FAP consiste à le réchauffer à une température supérieure à la température de combustion des suies par des résistances électriques. Mais cette solution est coûteuse en énergie, comme l'est un réchauffage par résistances électriques des gaz d'échappement. De plus, un réchauffage du filtre provoque des gradients thermiques dans le filtre qui, à terme, accélèrent sa détérioration.

De plus, la cérine utilisée pour abaisser la température de combustion des suies constitue elle-même une impureté tendant à obturer les canaux du FAP. Cela nécessite un démontage et un nettoyage du filtre tous les 80000km environ.

Le but de l'invention est de proposer un moyen de régénération d'un filtre à particules simple d'utilisation, efficace, économe en énergie, et ne présentant pas les inconvénients liés à la post-injection de carburant que l'on vient de signaler.

A cet effet, l'invention a pour objet un procédé de régénération d'un filtre à particules pour ligne d'échappement d'un moteur à combustion interne, selon lequel on réchauffe les particules tapissant les parois du filtre de manière à les porter à une température supérieure à leur température de combustion, caractérisé en ce que :
- on produit la chaleur nécessaire au réchauffement desdites particules en ajoutant à un premier composé solide présent dans un réacteur un deuxième composé sous forme gazeuse se combinant avec ledit premier composé pour former un troisième composé solide selon une première réaction exothermique ;
- et on utilise la chaleur résultant de la combustion desdites particules pour régénérer ledit premier composé solide présent dans un réacteur et ledit deuxième composé sous forme gazeuse selon une deuxième réaction endothermique inverse de ladite première réaction exothermique.

On peut transmettre aux particules la chaleur nécessaire à leur réchauffement et au troisième composé solide la chaleur nécessaire à la régénération du premier composé solide par l'intermédiaire des parois du filtre à particules, ou par l'intermédiaire des gaz d'échappement traversant ladite ligne d'échappement.

Ledit premier composé solide est de la chaux CaO et ledit deuxième composé est de l'eau, selon un exemple préféré mais non exclusif de l'invention.

L'invention a également pour objet une ligne d'échappement d'un moteur à combustion interne, du type comportant un filtre à particules et des moyens pour sa régénération permettant de porter les particules tapissant les parois du filtre à une température supérieure à leur température de combustion, caractérisée en ce que lesdits moyens comportent :
- au moins un réacteur renfermant un premier composé solide ;
- un évaporateur permettant de vaporiser un deuxième composé, susceptible de se combiner avec ledit premier composé pour former un troisième composé solide selon une réaction exothermique ;
- des moyens pour mettre en communication à la commande ledit évaporateur et ledit réacteur;
- des moyens pour communiquer auxdites particules la chaleur dégagée par la combinaison desdits premier et deuxième composés ;
- des moyens pour communiquer audit troisième composé solide la chaleur de réaction dégagée par la combustion desdites particules de manière à provoquer une régénération desdits premier et deuxième composés pendant ladite combustion ;
- des moyens pour recueillir ledit deuxième composé sous forme gazeuse lors de ladite régénération des premier et deuxième composés et pour le transmettre à un condenseur permettant de le liquéfier ;
- et des moyens pour mettre en communication à la commande ledit condenseur et ledit évaporateur.

Au moins un réacteur renfermant le premier composé solide peut être intégré dans le filtre à particules.

Au moins un réacteur renfermant le premier composé solide peut être placé contre la paroi extérieure de la ligne d'échappement.

Lesdits moyens pour communiquer audit troisième composé solide la chaleur de réaction dégagée par la combustion desdites particules peuvent comporter un caloduc recueillant la chaleur dégagée par les gaz d'échappement en aval du filtre à particules.

Ledit réacteur renfermant ledit premier composé solide peut être placé à l'intérieur ou à l'extérieur de la ligne d'échappement en amont du filtre à particules sur le parcours normal des gaz d'échappement, et les moyens pour communiquer audit troisième composé solide la chaleur de réaction dégagée par la combustion desdites particules peuvent comporter des conduites de dérivation et des clapets permettant de modifier le parcours des gaz d'échappement de manière à placer ledit réacteur en aval du filtre à particules sur le parcours des gaz d'échappement lors de la régénération des premier et deuxième composés.

Ledit réacteur renfermant ledit premier composé solide peut être placé à l'intérieur ou à l'extérieur de la ligne d'échappement en aval du filtre à particules, et un caloduc transmet la chaleur dégagée par la combinaison desdits premier et deuxième composés au filtre à particules et/ou aux gaz d'échappement en amont du filtre à particules.

La ligne d'échappement peut comporter des moyens pour détecter un colmatage du filtre à particules et pour déclencher un processus de régénération dudit filtre à particules.

Elle peut comporter des moyens pour détecter l'initiation de la réaction de combustion des particules tapissant le filtre et pour déclencher la mise en communication dudit réacteur et dudit condenseur.

L'invention concerne également un filtre à particules pour ligne d'échappement d'un moteur à combustion interne, **caractérisé en ce qu**'il comporte au moins un réacteur renfermant un premier composé solide susceptible de réagir avec un deuxième composé selon une réaction exothermique, de manière à porter les parois dudit filtre à une température supérieure à la température de combustion des particules destinées à être captées par ledit filtre ledit réacteur n'étant ouvert que face au passage d'au moins une conduite pemettant d'amener ledit deuxième compose dans le réacteur et de l'en extraire

Un réacteur au moins peut être placé autour dudit filtre et/ou être intégré dans ledit filtre.

Un réacteur thermochimique à base de chaux et eau est connu par le document US-A-5653106. Cependant, ce réacteur est utilisé dans un catalyseur trois vois et non pas dans un filtre à particules.

Comme on l'aura compris, l'invention repose sur l'association d'un filtre à particules (FAP) et d'un réacteur thermochimique capable de remonter le niveau de température d'une source de chaleur grâce à une réaction solide-gaz. Ce réacteur est utilisé pour porter le FAP ou les gaz d'échappement à une température supérieure à la température de combustion des suies. A cet effet, le réactif solide X utilisé dans le réacteur se combine avec un gaz G initialement contenu sous forme partiellement liquide dans un évaporateur selon une réaction exothermique réversible X + G → XG + chaleur. C'est ce dégagement de chaleur qui provoque l'élévation de la température du FAP ou des gaz d'échappement à un niveau suffisant pour la combustion des suies. Comme cette combustion est exothermique, elle va contribuer en tout ou partie à régénérer lesdits premier et deuxième composés par décomposition du troisième composé solide XG. La température minimale à laquelle doit être porté le composé XG lors de sa décomposition est fonction de la pression de vapeur de G obtenue lors de la mise en communication dudit réacteur et dudit condenseur, où le composé G est récupéré à l'état liquide. Périodiquement G, à l'état liquide, est renvoyé dans l'évaporateur, et il devient alors prêt à participer à un nouveau processus de régénération du FAP.

L'invention sera mieux comprise à la lecture de la description qui suit, donnée en référence aux figures annexées suivantes :
- la figure 1 qui montre schématiquement les divers éléments d'une portion de ligne d'échappement équipée d'un exemple de dispositif selon l'invention au repos, celle-ci étant vue en coupe longitudinale ;
- la figure 2 qui montre vue en coupe transversale selon II-II une portion de la ligne d'échappement de la figure 1 ;
- les figures 3 à 6 qui illustrent le fonctionnement de cet exemple de dispositif selon l'invention dans ses configurations successives ;
- la figure 7 qui illustre un deuxième exemple de dispositif selon l'invention ;
- les figures 8a, 8b qui illustrent un troisième exemple de dispositif selon l'invention.

On rappelle qu'un filtre à particules pour ligne d'échappement de moteur diesel est constitué par un élément en céramique tel que du carbure de silicium SiC présentant une multiplicité de canaux susceptibles de retenir sur leurs parois les suies résultant de la combustion du carburant. Il résiste à des températures élevées, de l'ordre des 1200°C observés localement sur ses parois internes lorsqu'on provoque la combustion des suies qui vise à régénérer le filtre. Cette régénération doit avoir lieu, en général, tous les 400 à 500 km, ce chiffre pouvant évidemment varier en fonction de la qualité du carburant utilisé, des conditions d'utilisation du véhicule et des réglages du moteur.

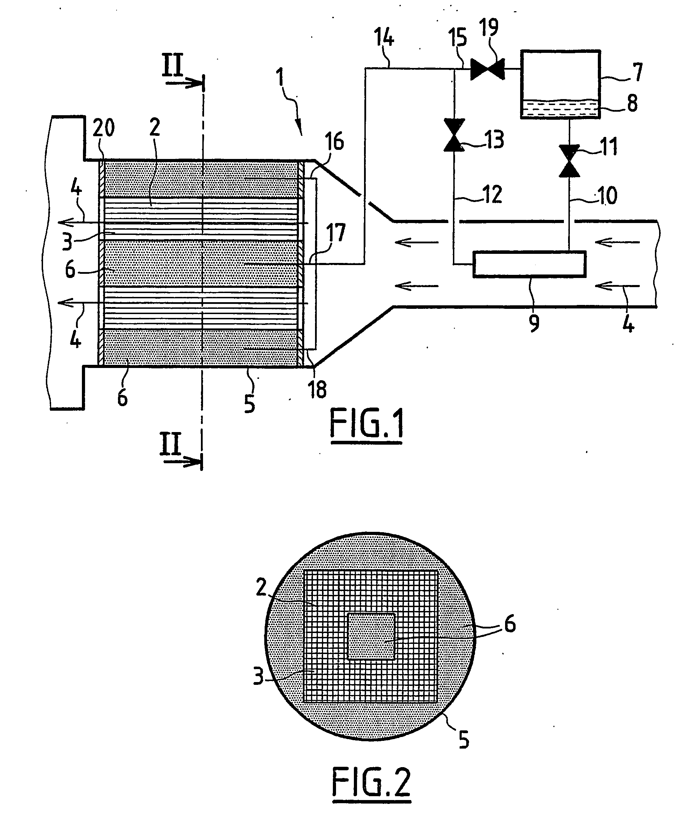

La ligne d'échappement 1 dont une partie est représentée sur la figure 1 est équipée d'un tel FAP 2 comportant une multiplicité de canaux 3 à travers lesquels circulent selon les flèches 4 les gaz d'échappement devant être épurés de leurs particules solides polluantes et provenant de la partie amont de la ligne 1 (à droite sur la figure 1).

Selon l'invention, la partie 5 de la ligne d'échappement où est implantée le FAP 2 comporte, disposé autour du FAP 2, et également à la place de la zone centrale du FAP 2 (donc intégré au FAP2), un réacteur contenant un réactif 6 constitué par un premier composé solide présentant les propriétés suivantes dans les conditions de température et de pression rencontrées :
- à la température habituelle des gaz d'échappement (soit généralement de l'ordre de 150-250°C), ce premier composé solide est capable d'absorber un deuxième composé donné se trouvant à l'état gazeux à cette même température mais susceptible d'être condensé dans des conditions normales ou aisément accessibles de température et de pression, ladite réaction d'absorption étant fortement exothermique de manière à pouvoir porter les suies tapissant les parois des canaux 3 du FAP 2 à une température supérieure à leur température de combustion ;
- et sous l'effet de la chaleur fournie par la combustion des suies, le premier composé solide est régénéré dans son état initial selon la réaction endothermique inverse de la précédente, ledit deuxième composé gazeux se dégageant pour être condensé.

La chaux CaO est un exemple préféré d'un tel premier composé solide, car elle peut réagir avec la vapeur d'eau selon la réaction réversible

CaO + H₂O ⇄ Ca (OH)₂ + 63,6 kJ/mol.H₂O

C'est cet exemple du couple CaO/H₂O qui sera considéré dans la suite de la description, sans pour autant qu'il doive être considéré comme limitatif.

Conformément à l'invention, le dispositif de régénération du FAP 2 comprend :
- un condenseur 7 placé à l'extérieur de la ligne 1 qui, lorsque le système est au repos, renferme de l'eau 8 à l'état liquide ;
- un évaporateur 9 placé à l'intérieur de la ligne 1 et en amont du FAP 2 ; il peut être mis en communication avec le condenseur 7 par l'intermédiaire d'une conduite 10 sur laquelle est interposée une vanne 11, fermée lorsque le système est au repos ;
- une conduite 12 piquée sur l'évaporateur 9 et sur laquelle est interposée une vanne 13 ; cette vanne permet ou non à la vapeur d'eau présente dans l'évaporateur 9 lorsque le dispositif est en fonctionnement d'être dirigée vers la chaux CaO 6 située à la périphérie et au centre du FAP 2 ; au repos, cette vanne 13 est fermée ; et
- deux conduites 14, 15 constituant chacune une dérivation de la conduite 12 en aval de la vanne 13 ; la conduite 14 peut amener la vapeur d'eau dans la chaux CaO 6, ou l'en extraire lors des étapes de régénération, préférentiellement au moyen d'une multiplicité de dérivations 16, 17, 18 pour garantir une répartition de l'eau aussi homogène qu'il est souhaitable dans la zone de réaction, ainsi qu'une extraction de l'eau également homogène lors des étapes de régénération de la chaux CaO 6 du réacteur; la conduite 15 permet d'amener la vapeur d'eau extraite de la zone de réaction dans le condenseur 7 ; une vanne 19 disposée sur cette conduite 15 permet de commander l'admission de la vapeur d'eau dans le condenseur 7.

Lorsque l'installation est au repos, elle peut se trouver dans la configuration représentée sur la figure 1, avec l'eau 8 présente dans le condenseur 7 à l'état liquide, toutes les vannes 11, 13, 19 étant fermées (et, donc, représentées en noir sur la figure 1).

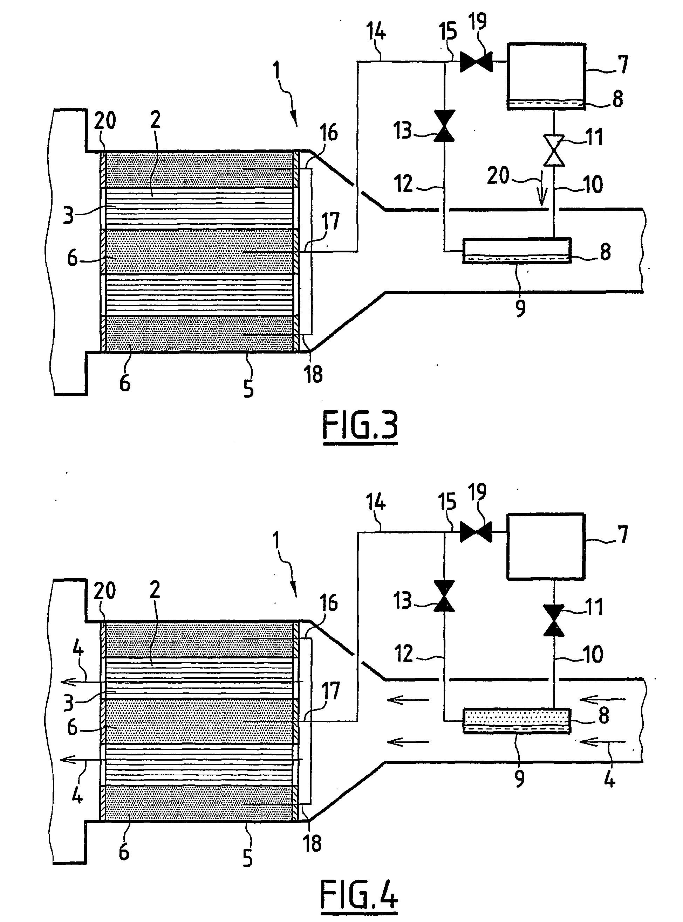

Lorsqu'on désire que l'installation puisse être rapidement opérationnelle, on ouvre la vanne 11 (figure 3, où la vanne 11 ouverte est représentée en clair) et on envoie l'eau 8 dans l'évaporateur 9 (flèche 20). Ce transfert peut s'effectuer par une pompe ou par simple gravité si la configuration de l'invention le permet. Une fois le transfert achevé, la vanne 11 est fermée, et l'eau 8 présente dans l'évaporateur est portée à la température des gaz d'échappement circulant autour de l'évaporateur 9. Avantageusement, l'opération de transfert de l'eau 8 dans l'évaporateur 9 a lieu lors d'une période d'arrêt du véhicule, lorsque les températures du condenseur 7 et de l'évaporateur 9 tendent à s'égaliser. Pour symboliser cette situation sur la figure 3, on n'a pas dessiné de flèches 4 symbolisant la circulation des gaz d'échappement.

Lorsque le véhicule roule, l'installation se trouve dans l'état représenté sur la fig.4. Toutes les vannes 11, 13, 19 sont fermées, et toute l'eau 8 se trouve dans l'évaporateur 9 à l'équilibre liquide-vapeur, et donc à la pression de vapeur saturante, à 5-35 bars par exemple, dépendant de la température des gaz d'échappement, 150 à 250°C respectivement.

C'est à partir de cet état que peut débuter une opération de régénération du FAP .

Cette opération peut être déclenchée à l'initiative du conducteur, ou de manière automatisée. Le moment de ce déclenchement peut être déterminé de façon systématique en fonction du nombre de kilomètres parcourus depuis la dernière régénération en date. Ce déclenchement peut aussi être décidé parce qu'on aurait déterminé, au moyen de capteurs adéquats, une perte de charge anormalement élevée des gaz d'échappement entre l'amont et l'aval du FAP 2, indice d'un colmatage des canaux 3 du FAP 2.

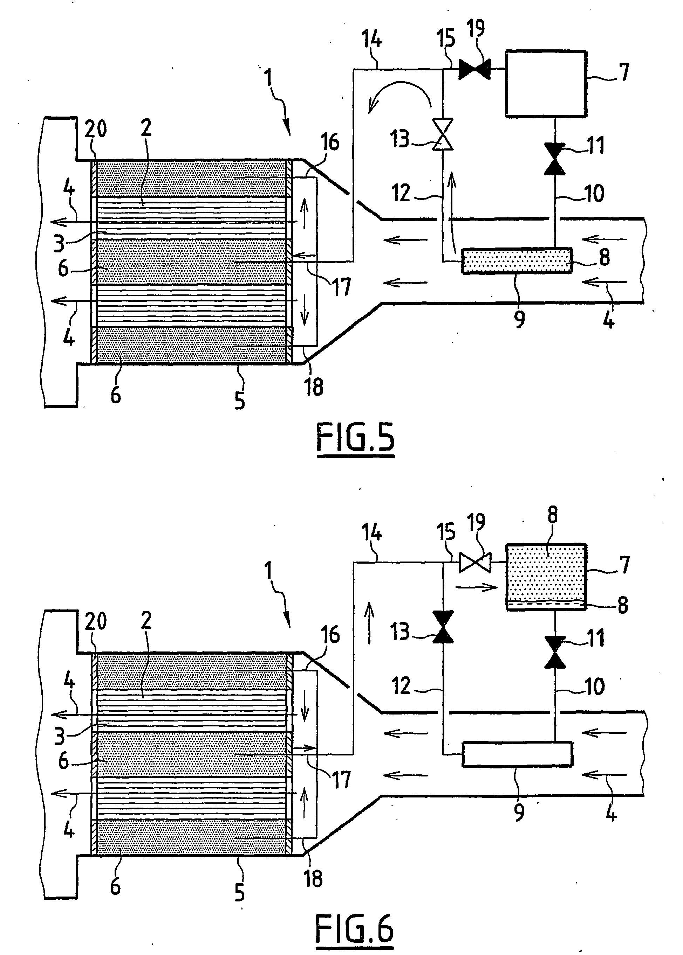

Lorsqu'une opération de régénération est décidée, l'installation est mise dans la configuration représentée sur la figure 5. Les vannes 11, 19 restent fermées et la vanne 13 est ouverte, de sorte que la vapeur d'eau 8 est dirigée vers la chaux CaO 6 pour y être absorbée et exécuter la réaction exothermique.

CaO + H₂O → Ca(OH)₂ + ΔH

La chaleur dégagée est communiquée aux suies déposés dans les canaux 3, via les parois du FAP 2, les différents paramètres de l'installation étant choisis pour que les suies soient portées à une température supérieure à leur température de combustion, de manière à initier cette combustion. En particulier, la pression de vapeur d'eau doit être suffisante. On débarrasse ainsi les canaux 3 du FAP 2 des suies qui les tapissent.

La combustion des suies étant elle-même exothermique, elle peut entraîner un échauffement sensible du FAP 2 jusqu'à 1000°C ou davantage. Il transmet cette chaleur à l'hydroxyde de calcium 6 qui l'environne. Mais cette élévation de température n'est pas obligatoire pour que le système fonctionne, comme expliqué plus haut.

Cette combustion peut être par exemple détectée par une mesure de la différence de température des gaz d'échappement ou de la différence de pression de part et d'autre du FAP 2. A ce moment, on fait passer l'installation dans la configuration de la figure 6, où les vannes 11, 13 sont fermées et où la vanne 19 est ouverte. Dans ces conditions, la vapeur d'eau qui se dégage suite à la réaction endothermique de régénération de la chaux CaO 6 :

Ca(OH)₂ → CaO + H₂O - ΔH

sous l'effet de la chaleur de combustion des suies, traverse les conduites 16, 17, 18, 14, 15 pour affluer dans le condenseur 7 où elle se condense. A cet effet, le condenseur 7 peut être refroidi par une circulation externe de fluide, mais un simple refroidissement par l'air ambiant peut être suffisant.

Lorsque les réactions de régénération du FAP 2 et de régénération de la chaux CaO 6 sont achevées (ce qu'on peut détecter en comparant les températures des gaz d'échappement en amont et en aval du FAP 2, et en constatant qu'elles sont redevenues très voisines), on ferme la vanne 19, et l'installation se retrouve dans l'état de repos précédemment décrit et représenté sur la figure 1.

En variante, on peut désirer que l'état de repos de l'installation, pendant lequel le véhicule et sa ligne d'échappement 1 fonctionnent en régime normal, soit constitué par l'état représenté sur la figure 4, où l'eau 8 se trouve à l'équilibre liquide-vapeur dans l'évaporateur 9.

L'ensemble de la régénération du FAP 2 entre le début de l'admission de la vapeur d'eau 8 dans la chaux CaO 6 et le retour de toute la vapeur d'eau 8 dans le condenseur 7 peut durer environ 1 minute, voire moins.

Par rapport aux installations de régénération du FAP existantes, l'installation selon l'invention présente l'avantage très significatif de limiter les apports d'énergie extérieurs voire de les supprimer, à part celui, tout à fait négligeable, nécessaire pour la commande des vannes 11, 13, 19 et le fonctionnement des capteurs permettant de déterminer les moments favorables pour le déclenchement des différentes étapes du cycle. Cela est permis par le fait que les réactions chimiques mises en jeu sont, en quelque sorte, « auto-entretenues », la chaleur de la réaction exothermique d'hydratation de la chaux CaO déclenchant la réaction exothermique de combustion des suies, dont la chaleur de réaction déclenche à son tour la réaction endothermique de déshydratation de l'hydroxyde Ca(OH)₂.

En particulier, une post-injection de carburant n'est plus forcément utile à la régénération du FAP 2. Il est même possible, si les différentes caractéristiques de l'installation sont bien adaptées, de se passer totalement de l'addition de cérine au carburant, si la chaleur dégagée par l'hydratation de la chaux CaO 6 s'avère capable à elle seule de procurer un niveau de température suffisant pour initier la combustion des suies. L'installation est donc particulièrement économique à l'usage.

On remarquera également que la régénération s'effectue sans faire appel à des matériaux présentant un danger pour l'environnement et ne produit elle-même aucun composé polluant.

Comme l'ensemble FAP 2 - réacteur est placé dans un boîtier 20 qui n'est ouvert que face aux éléments du FAP 2 et aux passages pour les conduites 16, 17, 18, la chaux CaO 6 n'est pas sur le trajet des gaz d'échappement et n'entre pas en contact avec eux. Elle n'est donc pas empoisonnée par des impuretés présentes dans le carburant (soufre par exemple).

Il est conseillé de mélanger la chaux CaO 6 à un matériau bon conducteur de la chaleur, tel que du graphite expansé, afin d'améliorer les transferts thermiques avec le FAP 2. Ce matériau a également l'avantage d'être poreux, donc de permettre le passage de la vapeur d'eau à travers la chaux CaO 6.

La configuration du FAP 2 et de son environnement donnée en exemple sur les figures 1 à 6 est avantageuse, en ce que le FAP 2 est réchauffé à la fois de l'intérieur et de l'extérieur par la chaux CaO 6 lors de la réaction d'hydratation, et inversement la chaux 6 à l'état hydraté est en tous points relativement proche de la source de chaleur représentée par le FAP 2 réchauffé lors de la combustion des suies. Pour ces raisons, l'efficacité des transferts thermiques et le déroulement des réactions chimiques qui en découlent peuvent être optimisés. Mais il demeurerait dans l'esprit de l'invention de disposer la chaux CaO 6 uniquement autour du FAP 2 ou uniquement au centre du FAP 2. A l'inverse, on peut prévoir qu'une pluralité de « barreaux » de chaux CaO 6 soient disposés à l'intérieur du FAP 2 au lieu d'un seul comme dans l'exemple représenté. De manière générale, disposer de la chaux CaO 6 en de multiples endroits du FAP 2 permet de minimiser les gradients de température à l'intérieur du FAP 2, donc les contraintes mécaniques auxquelles il est soumis.

Une autre variante par rapport à la configuration représentée consisterait à déplacer l'évaporateur 9 en aval du FAP 2, ou à l'extérieur de la ligne d'échappement 1 et au contact de sa paroi extérieure. De cette façon, on évite une possible perturbation des écoulements gazeux à l'intérieur du FAP 2.

Intégrer le réacteur renfermant la chaux CaO 6 au FAP 2 lui-même et/ou à son environnement immédiat présente les avantages que l'on a cités, mais n'est cependant pas sans inconvénients. La chaleur produite par les diverses réactions chimiques est consommée en partie pour chauffer les parois du FAP 2 et non pour chauffer directement les suies ou la chaux 6 hydratée. D'autre part, une partie de cette chaleur est entraînée par les gaz d'échappement circulants et n'est pas non plus récupérée par les suies ou la chaux 6 hydratée. L'obtention de résultats satisfaisants peut donc conduire à augmenter sensiblement les dimensions extérieures de la ligne d'échappement par rapport à la pratique habituelle. De plus, il est nécessaire de revoir complètement la conception de la ligne d'échappement dans la zone du FAP 2, et les modifications nécessaires peuvent s'avérer inadaptables à une ligne existante.

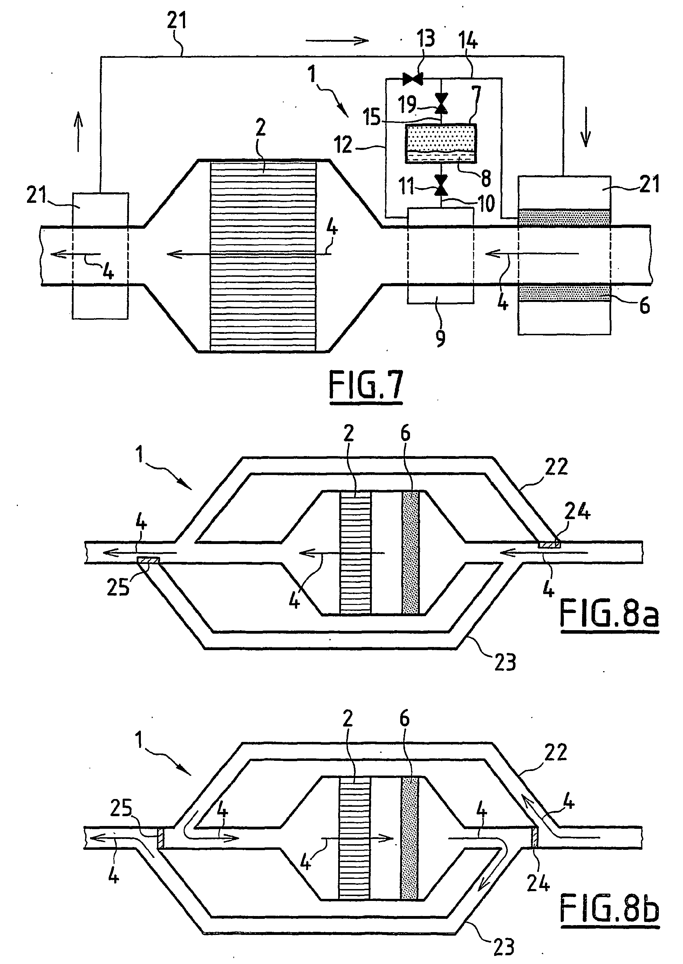

Pour remédier à ces inconvénients, on peut envisager d'utiliser la solution représentée sur la fig.7, où la totalité du réacteur de régénération du FAP 2 et de ses annexes est implantée à l'extérieur de la ligne d'échappement (les éléments de fonction identique à ceux représentés sur les fig.1 à 6 sont désignés par les mêmes références numériques).

Dans cette variante, le réacteur renfermant la chaux CaO 6 est placé à l'extérieur et autour de la ligne d'échappement 1, en amont du FAP 2. L'évaporateur 9 est également placé à l'extérieur et autour de la ligne d'échappement 9, entre le réacteur renfermant la chaux CaO 6 et le FAP 2. Les transferts thermiques entre les gaz d'échappement et ces deux appareils s'effectuent donc à travers la paroi de la ligne d'échappement 1. Un caloduc 21 ou tout autre dispositif fonctionnellement équivalent permet de transmettre la chaleur des gaz d'échappement se trouvant en aval du FAP 2 au réacteur contenant la chaux CaO 6 placé en amont du FAP 2.

Lorsque la régénération du FAP 2 est décidée, l'eau contenue dans l'évaporateur 9 est amenée sous forme vapeur dans la chaux CaO 6 par les conduites 12, 14 (la vanne 13 étant la seule ouverte), et la chaleur de réaction porte les gaz d'échappement à une température supérieure à la température de combustion des suies. La combustion des suies réchauffe les gaz d'échappement dont la chaleur est récupérée par le caloduc 21, dont le fluide transfère cette chaleur à la chaux 6 hydratée pour la régénération de la chaux CaO. Celle-ci se traduit par l'envoi de vapeur d'eau dans le condenseur 7 (la vanne 19 étant la seule ouverte). Après régénération, le fluide caloporteur du caloduc 21 retourne dans la partie aval de celui-ci.

Cette variante ne nécessite pour son implantation sur une ligne d'échappement existante qu'un espace libre suffisant dans l'environnement du FAP 2 pour y implanter le réacteur contenant la chaux CaO 6, l'évaporateur 9, le condenseur 7 et le caloduc 21. Un autre avantage est que les gaz d'échappement chauffés en amont du FAP 2 entrent directement en contact avec les suies sans nécessiter de réchauffement préalable du FAP 2, et que le réchauffement du FAP 2 suite à la combustion des suies est sensiblement homogène dans tout son volume, ce qui induit moins de contraintes dans le matériau du FAP 2.

Il ressort de ce qui précède que pour assurer la régénération du FAP 2, il faut que le réacteur renfermant la chaux CaO 6 soit placé en amont du FAP 2 sur le trajet des gaz d'échappement s'il n'est pas intégré au FAP 2 lui-même. En revanche, pendant la combustion des suies, il serait préférable que le réacteur renfermant la chaux 6 hydratée à régénérer soit placé en aval du FAP 2, de manière à pouvoir être directement régénéré par les gaz d'échappement réchauffés par la combustion des suies. Cela peut être réalisé en ajoutant à la ligne d'échappement un dispositif permettant l'inversion du sens de circulation des gaz d'échappement à travers le FAP 2 entre les deux étapes de réaction et de régénération de la chaux CaO 6.

Cela peut être réalisé au moyen de l'installation représentée sur les figures 8a, 8b. Sur la ligne d'échappement 1 est inséré un FAP 2, ainsi qu'un réacteur renfermant de la chaux CaO 6, séparé du FAP 2, et pouvant être traversé par les gaz d'échappement grâce à des perforations ou à une porosité adéquates. Le réacteur 6 est placé en amont du FAP 2 sur le parcours normal des gaz d'échappement. L'installation comporte également un évaporateur, un condenseur et les conduites et vannes nécessaires au fonctionnement du réacteur, similaires à ceux qui ont été décrits pour les précédentes variantes de l'invention et qui ne sont pas représentés sur les figures 8a, 8b. La ligne 1 comporte également deux conduites de dérivation 22, 23 permettant aux gaz de ne pas traverser directement le réacteur 6 et le FAP 2 et deux clapets 24, 25 commandant l'orientation des gaz d'échappement soit vers le réacteur 6 et le FAP 2 directement, soit dans les conduites de dérivation 22, 23.

Lors du fonctionnement normal de la ligne d'échappement 1, les clapets 24, 25 sont dans des positions telles qu'ils isolent les conduites de dérivation 22, 23 du trajet normal des gaz d'échappement. Ceux-ci traversent donc successivement le réacteur renfermant de la chaux CaO 6 et le FAP 2 (voir figure 8a).

Lorsqu'on fait débuter un cycle de régénération du FAP 2, les clapets 24, 25 sont maintenus dans la position précédente, et la vapeur d'eau est envoyée dans la chaux CaO 6 à partir de l'évaporateur (non représenté), de manière à provoquer la réaction d'hydratation de la chaux CaO 6 entraînant le réchauffement des gaz d'échappement avant leur traversée du FAP 2, et à amorcer la combustion des suies du FAP 2.

Lorsque la combustion des suies est amorcée et détectée, les clapets 24, 25 sont actionnés de manière à ce que les gaz d'échappement passent d'abord par la première conduite de dérivation 22, puis traversent le FAP 2 où ils sont réchauffés par la combustion des suies, puis le réacteur renfermant la chaux 6 à l'état hydraté, de manière à la déshydrater, puis la deuxième conduite de dérivation 23, de manière à être enfin renvoyés vers la partie aval de la ligne d'échappement 1.

Lorsque la régénération de la chaux CaO 6 est terminée, les clapets 24, 25 sont replacés dans leurs positions initiales et la ligne d'échappement 1 recommence à fonctionner dans des conditions normales.

Dans cette configuration, il est possible que les gaz d'échappement entraînent des particules de suie sur l'enveloppe du réacteur où la chaux 6 est en cours de déshydratation. Cette suie va achever sa combustion au plus près des tubes confinant les composés solides oxyde ou hydroxyde de calcium, ce qui constitue un facteur favorable à l'efficacité du transfert de chaleur.

Dans l'exemple décrit et représenté sur les figures 8a, 8b, le réacteur renfermant la chaux CaO 6 a été placé à l'intérieur de la ligne d'échappement 1, mais il serait possible de le placer autour de la ligne 1, comme dans l'exemple de la figure 7.

L'invention n'est pas limitée aux exemples qui ont été décrits et représentés. En particulier, il serait possible de combiner diverses variantes, en particulier de placer des réacteurs contenant de la chaux CaO 6 à la fois à l'intérieur et à l'extérieur du FAP 2, et de manière générale à l'intérieur et à l'extérieur de la ligne d'échappement 1.

Une autre variante de l'invention consisterait à placer le réacteur 6 renfermant le premier composé solide à l'intérieur ou à l'extérieur de la ligne d'échappement 1 en aval du FAP 2, et de transmettre la chaleur dégagée par la combinaison du premier composé solide et du deuxième composé gazeux aux particules de suie par l'intermédiaire d'un caloduc directement au FAP 2 et/ou aux gaz d'échappement en amont du FAP 2.

L'invention trouve une application privilégiée aux lignes d'échappement de moteurs diesel, mais elle peut être appliquée sur la ligne d'échappement de tout type de moteur à combustion interne pour lequel on estimerait nécessaire d'utiliser un filtre à particules.

## Revendications

1. Procédé de régénération d'un filtre à particules pour ligne d'échappement d'un moteur à combustion interne, selon lequel on réchauffe les particules tapissant les parois du filtre de manière à les porter à une température supérieure à leur température de combustion, **caractérisé en ce que :**
- on produit la chaleur nécessaire au réchauffement desdites particules en ajoutant à un premier composé solide présent dans un réacteur un deuxième composé sous forme gazeuse se combinant avec ledit premier composé pour former un troisième composé solide selon une première réaction exothermique ;
- et on utilise la chaleur résultant de la combustion desdites particules pour régénérer ledit premier composé solide présent dans un réacteur et ledit deuxième composé sous forme gazeuse selon une deuxième réaction endothermique inverse de ladite première réaction exothermique.

2. Procédé selon la revendication 1, **caractérisé en ce qu'**on transmet aux particules la chaleur nécessaire à leur réchauffement et au troisième composé solide la chaleur nécessaire à la régénération du premier composé solide par l'intermédiaire des parois du filtre à particules.

3. Procédé selon la revendication 1 ou 2, **caractérisé en ce qu'**on transmet aux particules la chaleur nécessaire à leur réchauffement et au troisième composé solide la chaleur nécessaire à la régénération du premier composé solide par l'intermédiaire des gaz d'échappement traversant ladite ligne d'échappement

4. Procédé selon l'une des revendications 1 à 3, **caractérisé eh ce que** ledit premier composé solide est de la chaux CaO et en ce que ledit deuxième composé est de l'eau.

5. Ligne d'échappement (1) d'un moteur à combustion interne, du type comportant un filtre à particules (2) et des moyens pour sa régénération permettant de porter les particules tapissant les parois du filtre (2) à une température supérieure à leur température de combustion, **caractérisée en ce que** lesdits moyens comportent :
- au moins un réacteur (6) renfermant un premier composé solide;
- un évaporateur (9) permettant de vaporiser un deuxième composé (8), susceptible de se combiner avec ledit premier composé solide pour former un troisième composé solide selon une réaction exothermique;
- des moyens (12, 13, 14, 16, 17) pour mettre en communication à la commande ledit évaporateur (9) et ledit réacteur (6) ;
- des moyens pour communiquer auxdites particules la chaleur dégagée par la combinaison desdits premier et deuxième composés ;
- des moyens pour communiquer audit troisième composé solide la chaleur de réaction dégagée par la combustion desdites particules de manière à provoquer une régénération desdits premier et deuxième composés pendant ladite combustion ;
- des moyens (15, 19) pour recueillir ledit deuxième composé sous forme gazeuse lors de ladite régénération des premier et deuxième composés et pour le transmettre à un condenseur (7) permettant de le liquéfier ;
- et des moyens (10, 11) pour mettre en communication à la commande ledit condenseur et ledit évaporateur.

6. Ligne d'échappement (1) selon la revendication 5, **caractérisée en ce qu**'au moins un réacteur (6) renfermant le premier composé solide est intégré dans le filtre à particules (2).

7. Ligne d'échappement (1) selon la revendication 5 ou 6, **caractérisée, ce qu**'au moins un réacteur (6) renfermant le premier composé solide est placé contre la paroi extérieure de la ligne d'échappement (1).

8. Ligne d'échappement (1) selon la revendication 7, **caractérisée en ce que** lesdits moyens pour communiquer audit troisième composé solide la chaleur de réaction dégagée par la combustion desdites particules comportent un caloduc (21) recueillant la chaleur dégagée par les gaz d'échappement en aval du filtre à particules (2).

9. Ligne d'échappement (1) selon la revendication 5, **caractérisée en ce que** ledit réacteur (6) renfermant ledit premier composé solide est placé à l'intérieur ou à l'extérieur de la ligne d'échappement (1) en amont du filtre à particules (2) sur le parcours normal des gaz d'échappement, et **en ce que** les moyens pour communiquer audit troisième composé solide la chaleur de réaction dégagée par la combustion desdites particules comportent des conduites de dérivation (22, 23) et des clapets (24, 25) permettant de modifier le parcours des gaz d'échappement de manière à placer ledit réacteur (6) en aval du filtre à particules (2) sur le parcours des gaz d'échappement lors de la régénération des premier et deuxième composés.

10. Ligne d'échappement (1) selon la revendication 5, **caractérisée en ce que** ledit réacteur (6) renfermant ledit premier composé solide est placé à l'intérieur ou à l'extérieur de la ligne d'échappement (1) en aval du filtre à particules (2), et **en ce qu'**eUe comporte un caloduc transmettant la chaleur dégagée par la combinaison desdits premier et deuxième composés au filtre à particules (2) et/ou aux gaz d'échappement en amont du filtre à particules.

11. Ligne d'échappement (1) selon l'une des revendications 5 à 10, **caractérisée en ce qu'**elle comporte des moyens pour détecter un colmatage du filtre à particules (2) et pour déclencher un processus de régénération dudit filtre à particules (2).

12. Ligne d'échappement (1) selon l'une des revendications 5 à 11, **caractérisée en ce qu'**elle comporte des moyens pour détecter l'initiation de la réaction de combustion des particules tapissant le filtre et pour déclencher la mise en communication dudit réacteur (6) et dudit condenseur (7).

13. Filtre à particules (2) pour ligne d'échappement (1) d'un moteur à combustion interne, **caractérisé en ce qu'**il comporte au moins un réacteur (6) situé à l'écart du parcours des gaz d'échappement, renfermant un premier composé solide susceptible de réagir avec un deuxième composé selon une réaction exothermique réversible, de manière à porter les parois dudit filtre (2) à une température supérieure à la température de combustion des particules destinées à être captées par ledit filtre (2), ledit réacteur n'étant ouvert que face en passage d'au moins une conduite (14, 16, 17, 18) permettant d'amener ledit deuxième composé dans le réacteur (6) et de l'en extraire.

14. Filtre à particules selon la revendication 13, **caractérisé en ce qu'**un réacteur (6) est placé autour dudit filtre.

15. Filtre à particules (2) selon la revendication 13 ou 14, **caractérisé en ce qu'**au moins un réacteur (6) est intégré dans ledit filtre.

## Claims

1. Method of regenerating a particulate filter for the exhaust line of an internal combustion engine, according to which the particles lining the walls of the filter are heated in such a manner as to bring them to a temperature higher than their combustion temperature, **characterised in that**:
- the necessary heat for heating said particles is produced by adding to a first solid compound present in a reactor a second compound in gaseous form, which combines with said first compound to form a third solid compound in accordance with a first exothermic reaction; and
- the heat resulting from the combustion of said particles is used to regenerate said first solid compound present in a reactor and said second compound in gaseous form in accordance with a second endothermic reaction, which is the inverse of said first exothermic reaction.

2. Method according to claim 1, **characterised in that** transmission to the particles of the heat required to heat them and transmission to the third solid compound of the heat required to regenerate the first solid compound is effected by the intermediary of the walls of the particulate filter.

3. Method according to either claim 1 or claim 2, **characterised in that** transmission to the particles of the heat required to heat them and transmission to the third solid compound of the heat required to regenerate the first solid compound is effected by the intermediary of the exhaust gases passing through said exhaust line.

4. Method according to any one of claims 1 to 3, **characterised in that** said first solid compound is lime CaO and said second compound is water.

5. Exhaust line (1) of an internal combustion engine of a type comprising a particulate filter (2) and means for its regeneration enabling the particles lining the walls of the filter (2) to be brought to a temperature higher than their combustion temperature, **characterised in that** said means comprise:
- at least one reactor (6) containing a first solid compound;
- an evaporator (9) that enables vaporisation of a second compound (8) capable of combining with said first solid compound to form a third solid compound in accordance with an exothermic reaction;
- means (12, 13, 14, 16, 17) for connecting said evaporator (9) and said reactor (6) to the control unit;
- means for imparting to said particles the heat released by the combination of said first and second compounds;
- means of imparting to said third solid compound the reaction heat released by the combustion of said particles in such a manner as to cause regeneration of said first and second compounds during said combustion;
- means (15, 19) for collecting said second compound in gaseous form during said regeneration of the first and second compounds and for transferring it to a condenser (7) that enables it to be turned into liquid form; and
- means (10, 11) for connecting said condenser and said evaporator to the control unit.

6. Exhaust line (1) according to claim 5, **characterised in that** at least one reactor (6) containing the first solid compound is integrated into the particulate filter (2).

7. Exhaust line (1) according to either claim 5 or claim 6, **characterised in that** at least one reactor (6) containing the first solid compound is placed against the external wall of the exhaust line (1).

8. Exhaust line (1) according to claim 7, **characterised in that** said means for imparting to the third solid compound the reaction heat released by the combustion of said particles comprise a heat pipe (21) that collects the heat released by the exhaust gases downstream of the particulate filter (2).

9. Exhaust line (1) according to claim 5, **characterised in that** said reactor (6) containing said first solid compound is placed inside or outside the exhaust line (1) upstream of the particulate filter (2) in the normal path of the exhaust gases, and **in that** the means for imparting to the third solid compound the reaction heat released by the combustion of said particles comprise bypass lines (22, 23) and valves (24, 25) that enable the path of the exhaust gases to be modified in such a manner as to place said reactor (6) downstream of the particulate filter (2) in the path of the exhaust gases during regeneration of the first and second compounds.

10. Exhaust line (1) according to claim 5, **characterised in that** said reactor (6) containing said first solid compound is placed inside or outside the exhaust line (1) downstream of the particulate filter (2) and **in that** it comprises a heat pipe that transmits the heat released by the combination of said first and second compounds to the particulate filter (2) and/or to the exhaust gases upstream of the particulate filter.

11. Exhaust line (1) according to any one of claims 5 to 10, **characterised in that** it comprises means for detecting clogging-up of the particulate filter (2) and for triggering a regeneration process of said particulate filter (2).

12. Exhaust line (1) according to any one of claims 5 to 11, **characterised in that** it comprises means for detecting the start of the combustion reaction of the particles lining the filter and for triggering the connection of said reactor (6) and said condenser (7).

13. Particulate filter (2) for an exhaust line (1) of an internal combustion engine, **characterised in that** it comprises at least one reactor (6) situated away from the path of the exhaust gases, containing a first solid compound capable of reacting with a second compound in accordance with a reversible exothermic reaction in such a manner as to bring the walls of said filter (2) to a temperature higher than the combustion temperature of the particles that are to be captured by said filter (2), said reactor being open only for passage from at least one pipe (14, 16, 17, 18) that enables said second compound to be brought into the reactor (6) and to be extracted from it.

14. Particulate filter according to claim 13, **characterised in that** a reactor (6) is placed around said filter.

15. Particulate filter (2) according to either claim 13 or claim 14, **characterised in that** at least one reactor (6) is integrated into said filter.

## Patentansprüche

1. Verfahren zur Regenerierung eines Partikelfilters für die Abgasstrecke eines Verbrennungsmotors, bei dem man die die Wände des Filters bedeckenden Partikel so erhitzt, dass sie auf eine Temperatur gebracht werden, die höher als ihre Verbrennungstemperatur ist, **dadurch gekennzeichnet, dass**:
- man die für die Erhitzung der Partikel erforderliche Wärme erzeugt, indem man einer in einem Reaktor vorliegenden, ersten festen Verbindung eine zweite Verbindung in Gasform zusetzt, die sich mit der ersten Verbindung kombiniert, um in einer ersten exothermen Reaktion eine dritte feste Verbindung zu bilden;
- und man die durch die Verbrennung dieser Teilchen entstehende Wärme dazu verwendet, die in einem Reaktor vorliegende, erste feste Verbindung und die zweite Verbindung in Gasform in einer zweiten, zur ersten exothermen Reaktion umgekehrten, endothermen Reaktion zu regenerieren.

2. Verfahren nach Anspruch 1, **dadurch gekennzeichnet, dass** man auf die Partikel die für ihre Erhitzung erforderliche Wärme und auf die dritte feste Verbindung die für die Regenerierung der ersten festen Verbindung erforderliche Wärme über die Wände des Partikelfilters überträgt.

3. Verfahren nach Anspruch 1 oder 2, **dadurch gekennzeichnet, dass** man auf die Partikel die für ihre Erhitzung erforderliche Wärme und auf die dritte feste Verbindung die für die Regenerierung der ersten festen Verbindung erforderliche Wärme über die die Abgasstrecke durchströmenden Abgase überträgt.

4. Verfahren nach einem der Ansprüche 1 bis 3, **dadurch gekennzeichnet, dass** die erste feste Verbindung Kalk CaO ist und dass die zweite Verbindung Wasser ist.

5. Abgasstrecke (1) eines Verbrennungsmotors, umfassend ein Partikefilter (2) und Mittel zu seiner Regenerierung, die es gestatten, die die Wände des Filters (2) bedeckenden Partikel auf eine Temperatur zu bringen, die höher als ihre Verbrennungstemperatur ist, **dadurch gekennzeichnet, dass** diese Mittel umfassen:
- mindestens einen Reaktor (6), der eine erste feste Verbindung enthält;
- einen Verdampfer (9), der die Verdampfung einer zweiten Verbindung (8) gestattet, die sich mit der ersten festen Verbindung kombinieren kann, um in einer exothermen Reaktion eine dritte feste Verbindung zu bilden;
- Mittel (12, 13, 14, 16, 17) zum Verbinden des Verdampfers (9) und des Reaktors (6) durch Steuerung;
- Mittel zur Übertragung der durch die Kombination der ersten und der zweiten Verbindung freigesetzten Wärme auf die Partikel;
- Mittel zur Übertragung der durch die Verbrennung der Teilchen freigesetzten Wärme auf die dritte feste Verbindung, so dass eine Regenerierung der ersten und der zweiten Verbindung während dieser Verbrennung bewirkt wird;
- Mittel (15, 19) zur Aufnahme der zweiten Verbindung in Gasform bei der Regenerierung der ersten und der zweiten Verbindung und zu ihrer Übertragung in einen Kondensator (7), der ihre Verflüssigung gestattet;
- und Mittel (10, 11) zum Verbinden des Kondensators und des Verdampfers durch Steuerung.

6. Abgasstrecke (1) nach Anspruch 5, **dadurch gekennzeichnet, dass** in das Partikelfilter (2) mindestens ein die erste feste Verbindung enthaltender Reaktor (6) integriert ist.

7. Abgasstrecke (1) nach Anspruch 5 oder 6, **dadurch gekennzeichnet, dass** mindestens ein die erste feste Verbindung enthaltender Reaktor (6) an die Außenwand de Abgasstrecke (1) angesetzt ist.

8. Abgasstrecke (1) nach Anspruch 7, **dadurch gekennzeichnet, dass** die Mittel zur Übertragung der durch die Verbrennung der Partikel freigesetzten Reaktionswärme auf die dritte feste Verbindung eine Wärmeleitung (21) umfassen, die die stromab des Partikelfilters (2) von den Abgasen abgegebene Wärme sammelt.

9. Abgasstrecke (1) nach Anspruch 5, **dadurch gekennzeichnet, dass** der die erste feste Verbindung enthaltende Reaktor (6) innerhalb oder außerhalb der Abgasstrecke (1) stromauf des Partikelfilters (2) in dem normalen Weg der Abgase angeordnet ist und dass die Mittel zur Übertragung der durch die Verbrennung der Partikel freigesetzten Reaktionswärme auf die dritte feste Verbindung Umgehungsleitungen (22, 23) und Ventile (24, 25) umfassen, die eine Änderung des Wegs der Abgase gestatten, so dass der Reaktor bei der Regenerierung der ersten und der zweiten Verbindung in dem Weg der Abgase stromab des Partikelfilters (2) angeordnet wird.

10. Abgasstrecke (1) nach Anspruch 5, **dadurch gekennzeichnet, dass** der die erste feste Verbindung enthaltende Reaktor (6) innerhalb oder außerhalb der Abgasstrecke (1) stromab des Partikelfilters (2) angeordnet ist und dass sie eine Wärmeleitung umfasst, die die durch die Kombinierung der ersten und der zweiten Verbindung freigesetzte Wärme auf das Partikelfilter (2) und/oder auf die Abgase stromauf des Partikelfilters überträgt.

11. Abgasstrecke (1) nach einem der Ansprüche 5 bis 10, **dadurch gekennzeichnet, dass** sie Mittel zum Erfassen einer Verstopfung des Partikelfilters (2) und zum Auslösen eines Prozesses der Regenerierung des Partikelfilters (2) umfasst.

12. Abgasstrecke (1) nach einem der Ansprüche 5 bis 11, **dadurch gekennzeichnet,** sie Mittel zum Erfassen der Initiierung der Reaktion der Verbrennung der das Filter bedeckenden Partikel und zum Auslösen der Verbindung des Reaktors (6) und des Kondensators (7) umfasst.

13. Partikelfilter (2) für die Abgasstrecke (1) eines Verbrennungsmotors, **dadurch gekennzeichnet, dass** es mindestens einen in einem Abstand von dem Weg der Abgase angeordneten Reaktor (6) umfasst, der eine erste feste Verbindung enthält, die mit einer zweiten Verbindung in einer reversiblen exothermen Reaktion so reagieren kann, dass die Wände des Filters (2) auf eine Temperatur gebracht werden, die höher als die Verbrennungstemperatur der Partikel ist, die von dem Filter (2) eingefangen werden sollen, wobei dieser Reaktor nur gegenüber dem Durchgang mindestens einer Leitung (14, 16, 17, 18) offen ist, die die Zufuhr der zweiten Verbindung in den Reaktor (6) und ihre Abfuhr aus diesem gestattet.

14. Partikelfilter nach Anspruch 13, **dadurch gekennzeichnet, dass** ein Reaktor (6) um das Filter herum angeordnet ist.

15. Partikelfilter nach Anspruch 13 oder 14, **dadurch gekennzeichnet, dass** mindestens ein Reaktor (6) in das Filter integriert ist.
